Europäisches Patentamt

European Patent Office

Office européen des brevets

(11) Numéro de publication: **0 437 987 A2**

# (12) DEMANDE DE BREVET EUROPEEN

(21) Numéro de dépôt: 90401206.9

(22) Date de dépôt: 04.05.90

(51) Int. Cl.⁵: **F16J 3/02**

(30) Priorité: 19.01.90 FR 9000596

(43) Date de publication de la demande:
24.07.91 Bulletin 91/30

(84) Etats contractants désignés:
DE ES GB IT

(71) Demandeur: OLAER INDUSTRIES
Z.I. 16 Rue de Seine
F-92704 Colombes Cedex(FR)

(72) Inventeur: Brault, François
1 Place AP 15
F-75015 Paris(FR)
Inventeur: Jaunet, Alain
6 Rue Auguste Renoir
F-95370 Montigny les Cormeilles(FR)
Inventeur: Mendowski, Marc
22b Rue Jean Bourguignon
F-92500 Rueil Malmaison(FR)

(74) Mandataire: CABINET BONNET-THIRION
95 Boulevard Beaumarchais
F-75003 Paris(FR)

(54) Séparateur souple composite pour réservoir de pression, son procédé de réalisation, et réservoir de pression comportant un tel séparateur souple.

(57) Il s'agit d'un réservoir de pression dont le séparateur souple (12) comporte trois couches, à savoir une couche externe (21A), une couche interne (21B), et une couche intermédiaire (23) au moins en partie imperméable aux gaz.

Suivant l'invention, la couche intermédiaire (23) comporte une feuille métallique (24).

Application, notamment, aux réservoirs de pression destinés à l'équipement de circuits de freinage.

FIG.7

# SÉPARATEUR SOUPLE COMPOSITE POUR RÉSERVOIR DE PRESSION, SON PROCÉDÉ DE RÉALISATION, ET RÉSERVOIR DE PRESSION COMPORTANT UN TEL SÉPARATEUR SOUPLE

La présente invention concerne d'une manière générale les réservoirs de pression, du type de ceux utilisés par exemple comme accumulateurs ou transmetteurs de pression.

Elle vise plus particulièrement le cas où un tel réservoir de pression comporte, dans un corps rigide, un séparateur souple en forme de membrane, qui, pour une partition entre deux fluides différents, sépare en deux chambres distinctes le volume intérieur de ce corps, ce séparateur souple étant en prise, par son débouché, avec un organe de support, qui, solidaire dudit corps, en maintient ledit débouché plaqué contre la surface interne de celui-ci.

S'agissant, par exemple, d'un accumulateur de pression à implanter en dérivation sur un quelconque circuit hydraulique, l'une des deux chambres est une chambre de gaz, c'est-à-dire une chambre confinant de manière étanche une charge déterminée de gaz sous pression, tandis que l'autre est une chambre de liquide, cette autre chambre étant destinée à être mise en communication avec le circuit hydraulique concerné.

L'un des problèmes à résoudre dans la réalisation des réservoirs de pression de ce type tient à ce que son séparateur souple doit répondre à un certain nombre de caractéristiques qui, sans autre, sont difficilement compatibles.

Il doit en effet, à la fois, présenter une certaine capacité de déformation élastique, et, donc, pour ce faire, être réalisé en matériau déformable, être capable de résister à la température, être capable de résister à l'agressivité des fluides au contact desquels il se trouve, et, plus particulièrement, du liquide présent dans la chambre de liquide, notamment lorsqu'il s'agit d'un liquide de frein, comme cela peut être le cas dans les circuits de freinage du type communément dit "ABS", et, conjointement, s'opposer à toute diffusion sensible, dans ce liquide, du gaz présent sous charge dans la chambre de gaz associée.

A défaut, une telle diffusion de gaz dans ce liquide pourrait conduire à une perturbation dangereuse du circuit hydraulique desservi.

Or, les matériaux déformables présentant des performances d'imperméabilité aux gaz satisfaisantes sont généralement incompatibles avec certains fluides, tels les liquides de frein, et/ou ne conviennent pas pour certaines conditions d'utilisation, telles celles où intervient la température.

Par exemple, pour rendre un élastomère de type Butyl plus étanche aux gaz, il faut lui additionner une charge, qui, conjointement, le rend alors sensible aux liquides de frein.

Pour surmonter les difficultés de ce type, il a été proposé, de longue date, de réaliser de manière composite le séparateur souple, pour une dissociation des fonctions qu'il a à assumer.

C'est le cas, notamment, dans le brevet français No 1.272.420, dans lequel le séparateur souple est en pratique constitué par deux cloisons distinctes, la cloison la plus externe, en matériau élastique, étant destinée à assurer la compatibilité de l'ensemble avec le liquide à prendre en considération, tandis que la cloison la plus interne, réalisée, elle, en matériau non élastique, est choisie pour être imperméable aux gaz.

C'est le cas aussi dans le brevet français, qui, déposé le 7 Décembre 1979 sous le No 79 30152, a été publié sous le No 2.443.622.

Suivant une disposition du même genre, il est connu, également, de réaliser le séparateur souple en trois couches adjacentes en matériau déformable, à savoir, deux couches élastiques, l'une externe, l'autre interne, et une couche intermédiaire à faible perméabilité aux gaz, qui présente l'inconvénient qu'une certaine quantité de gaz peut néanmoins migrer dans le liquide au bout d'une durée d'utilisation prolongée.

Il est fait état d'une disposition de ce type dans la demande de brevet français qui, déposée le 21 Août 1987 sous le No 87 11815, a été publiée sous le No 2.603.075.

Dans cette demande de brevet français No 87 11815, le parti est pris, cependant, de mettre en oeuvre une couche intermédiaire perméable aux gaz, cette couche intermédiaire constituant alors une sorte de drain, qui, captant le gaz diffusant à travers la couche interne, évacue ensuite ce gaz à l'extérieur du corps rigide concerné.

Du fait de la perte de gaz systématique dont il est l'objet, un réservoir de pression de ce type n'a nécessairement qu'une durée de vie limitée.

Il est de ce fait impropre à certaines applications, et notamment à l'équipement des circuits de freinage de type "ABS" ici plus particulièrement visés, ceux-ci devant avoir, sans révision préalable, une durée de vie égale à celle des véhicules concernés.

Lorsque le parti est pris de mettre en oeuvre une couche intermédiaire réellement imperméable aux gaz, la difficulté réside dans la réalisation de cette couche intermédiaire, tant en ce qui concerne son matériau constitutif qu'en ce qui concerne sa géométrie.

Dans le brevet français No 1.272.420, cette couche imperméable aux gaz, qui forme alors une cloison distincte, est en polyuréthane, et elle se présente sous la forme d'une sorte de soufflet qui se déploie plus ou moins en fonction de la charge de gaz.

Mais, outre qu'une telle cloison est de réalisation relativement malaisée, le polyuréthane ne donne pas totalement satisfaction lorsque l'imperméabilité aux gaz recherchée est particulièrement poussée, et, dans le cas de cycles de travail répétitifs rapides et nombreux, comme cela est le cas dans les circuits de freinage de type "ABS", la résistance mécanique d'une couche intermédiaire ainsi réalisée risque de s'avérer insuffisante.

La présente invention a d'une manière générale pour objet une disposition apportant au contraire une solution particulièrement satisfaisante et sûre au problème de la réalisation d'un séparateur souple à la fois compatible avec un liquide agressif et présentant malgré tout une imperméabilité aux gaz très poussée, supérieure à celle de l'art connu à ce jour.

De manière plus précise, elle a tout d'abord pour objet un séparateur souple composite pour réservoir de pression du genre comportant trois couches adjacentes en matériau déformable, à savoir une couche externe, une couche interne, et une couche intermédiaire au moins en partie imperméable aux gaz, ce séparateur souple étant d'une manière générale caractérisé en ce que la couche intermédiaire comporte une feuille métallique ; elle a encore pour objet une réservoir de pression comportant un tel séparateur souple.

L'imperméabilité aux gaz des feuilles métalliques est bien connue ; elle tient à la structure moléculaire de leur constituant métallique.

Mais, s'étendant exclusivement dans deux directions une feuille métallique, qu'elle soit prise isolément ou qu'elle soit prise en sandwich entre deux feuilles de protection en adhérant à celles-ci, ne se prête normalement pas à une quelconque conformation en membrane de séparateur souple, et on doit normalement en attendre une faible résistance mécanique aux cycles répétitifs de déformation du type de ceux dont est l'objet un tel séparateur souple dans un réservoir de pression.

La mise en oeuvre d'une feuille métallique pour la constitution d'un tel séparateur souple est donc normalement totalement étrangère à l'homme de métier.

La présente invention est fondée sur la découverte, à priori surprenante, qu'il est au contraire possible de conformer en membrane de séparateur souple une feuille métallique, et que, moyennant certaines précautions, celle-ci conserve toute son intégrité même lorsqu'elle est soumise à des cycles de déformation répétitifs.

Sur le premier point, la découverte porte sur le fait que, ainsi que l'expérience le confirme, il est parfaitement possible de conformer en membrane de séparateur souple un flan initialement plat, même lorsqu'il s'agit d'un flan comportant une feuille métallique ou formé d'une telle feuille métallique.

Sur le deuxième point, la découverte a porté sur le fait que, pour conserver l'intégrité de la feuille métallique que comporte suivant l'invention la couche intermédiaire de ce séparateur, et les essais à la fatigue le confirment, il est nécessaire que la couche interne, formant à cet égard couche de protection, soit propre à maintenir cette couche intermédiaire dans la zone de la fibre neutre de l'ensemble.

La couche interne du séparateur souple suivant l'invention est établie en conséquence.

Pour conformer en membrane de séparateur souple un flan initialement plat comportant une feuille métallique ou formé d'une telle feuille métallique, on peut par exemple procéder par hydroformage, suivant une technique connue par ellemême.

De ce point de vue, la présente invention a encore pour objet un procédé pour la réalisation d'un séparateur souple du genre concerné, ce procédé étant d'une manière générale caractérisé en ce qu'il consiste à fabriquer isolément chacune des couches qui constituent ce séparateur souple, et à les emboîter successivement les unes dans les autres, et en ce que, s'agissant de la fabrication de la couche intermédiaire, on met en forme, par hydro-formage, un flan initialement plat.

Mais, il s'avère, à l'expérience, qu'il peut résulter d'un tel formage la création, au sein du métal, de contraintes internes qui, venant fragiliser ce métal, sont susceptibles, en service, d'être ultérieurement à l'origine de craquelures se développant de manière non contrôlée et préjudicables à l'étanchéité recherchée.

C'est pourquoi, en variante du procédé précédent, la présente invention a encore pour objet un procédé pour la réalisation du séparateur souple du genre concerné, suivant lequel, comme précédemment, on fabrique isolément chacune des couches constituant ce séparateur souple et on les emboîte successivement les unes avec les autres, ce procédé étant d'une manière générale caractérisé en ce que, pour la fabrication de la couche intermédiaire, on part d'un flan initialement plat, qui comporte la feuille métallique à mettre en oeuvre, ou qui se réduit à une telle feuille, et on découpe à plat ce flan de manière à y individualiser les éléments de feuille recherchés, de manière telle que, ces éléments de feuille étant écartés les uns des autres sur une partie au moins de leur contour, ils sont aptes, par ce contour, à devenir au moins jointifs les uns avec les autres lorsque la couche intermédiaire ainsi formée est mise en place entre les couches interne et externe qui doivent l'encadrer.

Suivant une première forme de mise en oeuvre possible de ce procédé, ces éléments de feuille sont jointifs les uns avec les autres, par leurs tranches, pour la configuration de repos du séparateur.

Dans ce cas, le parti est systématiquement pris d'accepter éventuellement une certaine lacune, limitée, d'étanchéité, entre les éléments de feuille mis en oeuvre, si ceux-ci s'écartent légèrement les uns des autres lorsque le séparateur souple s'écarte de sa configuration de repos.

En effet le temps au cours duquel le séparateur souple est en configuration de repos ou dans une configuration proche de celle-ci est en pratique très largement prédominant.

En outre, le calcul montre, et l'expérience confirme, que, pris dans son ensemble, le taux d'imperméabilité aux gaz reste alors de toute façon très important, en étant largement supérieur à 90 %, voire même à 95 %.

Mais, suivant une deuxième forme de mise en oeuvre, préférée, du procédé, les éléments de feuille mis en oeuvre se recouvrent successivement au moins pour partie l'un l'autre le long de leurs côtés latéraux.

Le taux d'imperméabilité aux gaz est alors encore supérieur.

Dans tous les cas, les éléments de feuille mis en oeuvre n'ayant individuellement qu'une extension limitée, la mise en forme, elle-même limitée, dont ils sont l'objet après leur découpe à plat, lors même de l'assemblage et du pressage des trois couches concernées, n'est avantageusement pas de nature à y engendrer des contraintes internes susceptibles ensuite d'être à l'origine de quelconques craquelures.

Ainsi, avec un séparateur souple réalisé conformément à ce procédé de l'invention, il n'est pas observé, en service, de telles craquelures dans les éléments de feuille constitutifs de la feuille de métal qu'il comporte, et, par conséquent, le taux de fuite aux gaz de ce séparateur souple reste avantageusement stable au cours du temps.

Enfin, ce procédé de l'invention est favorable à une industrialisation du processus de fabrication du séparateur souple concerné, en facilitant la mise en forme de la feuille métallique de sa couche intermédiaire, notamment lorsque, suivant une forme préférée de réalisation, les éléments de feuille découpés dans cette feuille métallique restent attenants les uns avec les autres.

Certes, il a déjà été proposé, par le modèle d'utilité japonais publié sous le No 63-190902, de faire en sorte que soit assuré un fractionnement en éléments de feuille d'une feuille métallique mise en oeuvre pour contrôler l'imperméabilité aux gaz d'un séparateur souple.

Mais, outre que, dans ce modèle d'utilité japonais, la feuille métallique est disposée à la surface de ce séparateur souple, son fractionnement en éléments de feuille n'intervient qu'après sa mise en place sur celui-ci, en résultant de lignes de moindre résistance l'affectant à cet effet.

Elle ne résout donc pas la question de la mise en forme, à la configuration du séparateur souple à équiper, d'une feuille initialement plate, et, de surcroît, rien n'assure que le fractionnement recherché intervienne exactement suivant les modalités espérées, au risque, encore, du développement de contraintes internes susceptibles ensuite d'engendrer des craquelures.

Il n'en est pas de même, avec le procédé suivant l'invention, grâce au fait que la feuille métallique mise en oeuvre est, systématiquement, et donc de manière parfaitement contrôlée, fractionnée, dès l'origine, à plat, en éléments de feuille.

Tout porte à croire, de surcroît, que, en service, le taux de fuite aux gaz du séparateur souple décrit dans le modèle d'utilité japonais, est, en raison même du fractionnement pratiqué, très important.

En effet, eu égard au fait que ce fractionnement se fait in situ, à la surface même du séparateur souple, les éléments de feuille qui en résultent ne peuvent au mieux qu'être jointifs.

Il n'en est pas de même avec le procédé suivant l'invention, suivant lequel, si désiré, ces éléments de feuille peuvent au contraire se recouvrir l'un l'autre successivement.

Certes, également, il a déjà été proposé, dans le brevet américain No US-A-3.526.580, de mettre en oeuvre une couche de métal pour parfaire l'étanchéité aux gaz d'un séparateur.

Mais, dans ce brevet américain, le séparateur comporte, en fait, plusieurs couches de métal, et il est de ce fait, en définitive, essentiellement métallique, sans qu'aucune de ces couches de métal ne soit prise en sandwich entre deux feuilles de protection en matière synthétique.

En outre, les métaux mis en oeuvre sont successivement le plomb, l'argent et l'indium, sans qu'il soit question d'aluminium.

Enfin, et surtout, il n'est pas mis en oeuvre, dans le séparateur faisant l'objet de ce brevet américain, de "feuille" de métal au sens de la présente invention, c'est-à-dire de feuille de métal performée, mais, au contraire, les couches de métal correspondantes sont formées in situ, sur une feuille de support en matière synthétique, par dépôt chimique puis électrolytique.

Il s'agit donc, dans ce brevet américain, d'un séparateur de caractéristiques complètement différentes de celles du séparateur suivant l'invention.

Les caractéristiques et avantages de l'invention ressortiront d'ailleurs de la description qui va suivre, à titre d'exemple, en référence aux dessins schématiques annexés sur lesquels :

la figure 1 est une vue en coupe axiale d'un séparateur souple suivant l'invention ;

les figures 2, 3 reprennent, chacune respectivement, à échelle supérieure, les détails de la figure 1 repérés par des encarts II, III sur celle-ci ;

la figure 4 est une vue en coupe axiale éclatée, qui, analogue à celle de la figure 1, représente individuellement chacune des couches constitutives du séparateur souple suivant l'invention ;

la figure 5 reprend, à échelle supérieure, le détail de la figure 4 repéré par un encart V sur cette figure 4 ;

la figure 6 est une vue analogue à celle de la figure 5, pour une variante de réalisation de la couche concernée ;

la figure 7 est, à l'échelle de la figure 1, une vue en coupe axiale d'un réservoir de pression équipé d'un séparateur souple suivant l'invention ;

la figure 8 est, avec un arrachement local, une vue en coupe axiale analogue à celle de la figure 1, pour une variante de réalisation ;

la figure 9 est une vue, à plat, de la feuille métallique mise en oeuvre, suivant cette variante de réalisation, pour la constitution de la couche intermédiaire que comporte le séparateur souple suivant l'invention ;

la figure 10 est une vue en coupe axiale éclatée, qui, analogue à celle de la figure 4, représente, individuellement, cette couche intermédiaire dans cette variante de réalisation ;

la figure 11 est une vue en coupe axiale, qui, reprenant pour partie celle de la figure 10, est relative à la seule feuille métallique mise en oeuvre dans cette variante de réalisation ;

la figure 12 est une vue en plan de cette feuille métallique, suivant la flèche XII de la figure 11 ;

la figure 13 en est, à échelle supérieure, une vue en coupe transversale, suivant la ligne XIII-XIII de la figure 11.

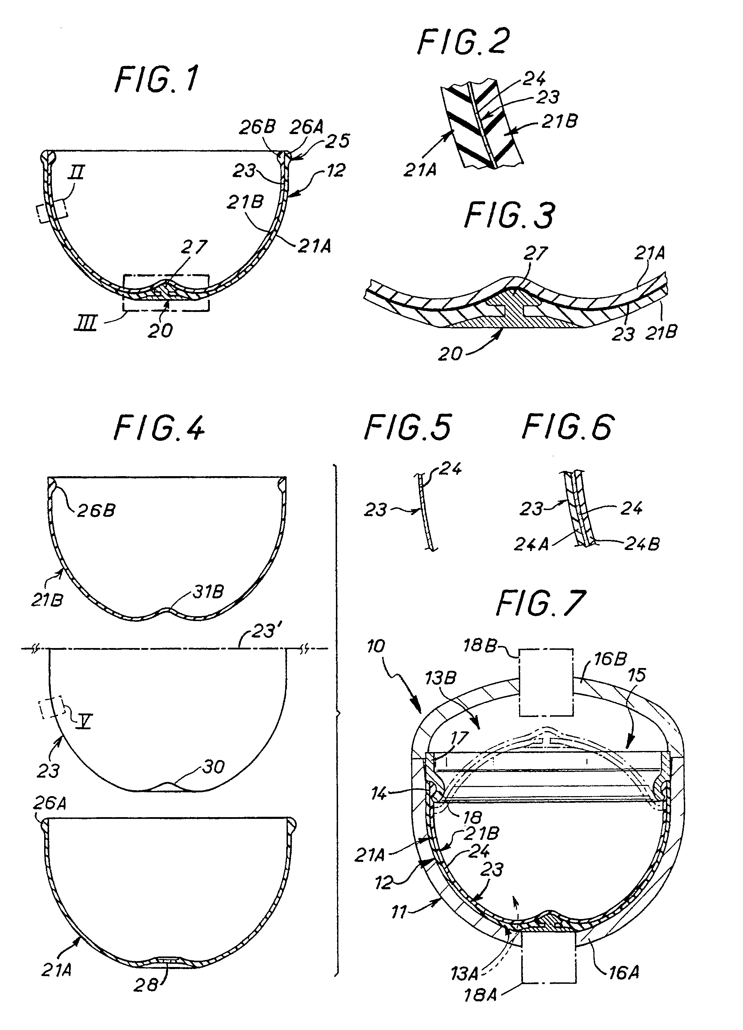

Tel qu'illustré sur ces figures, et, plus particulièrement, sur la figure 7, il s'agit de l'équipement d'un réservoir de pression 10 comportant un corps rigide 11, et, dans ce corps rigide 11, un séparateur souple 12, en forme de membrane, et, plus précisément, en forme de poche ou de vessie, qui sépare en deux chambres distinctes 13A, 13B le volume intérieur de ce corps rigide 11, ledit séparateur souple 12 étant en prise, par son débouché 14 avec un organe de support 15, qui, solidaire du corps rigide 11, en maintient ledit débouché 14 plaqué contre la surface interne de celui-ci.

Dans la forme de réalisation représentée, le corps rigide 11 est constitué de deux coquilles 16A, 16B, dûment aboutées l'une à l'autre et convenablement solidarisées l'une à l'autre, en pratique par soudage, à savoir, une coquille inférieure, 16A, formant fond, et une coquille supérieure, 16B, formant couvercle.

Conjointement, dans cette forme de réalisation, l'organe de support 15 est un organe annulaire comportant, d'une part, une partie cylindrique 17, par laquelle il est appliqué à la surface interne de la coquille inférieure 16A du corps rigide 11, en étant convenablement solidarisé, en pratique par soudage, à celle-ci, et, d'autre part, une partie 18, qui est conformée en crochet, et par laquelle il agrippe, à son débouché 14, le séparateur souple 12, en plaquant ce débouché 14 contre ladite surface interne de cette coquille inférieure 16A.

Les coquilles 16A, 16B, et l'organe de support 15, peuvent par exemple être métalliques.

Tel que schématisé en traits interrompus sur la figure 7, l'ensemble se complète, d'une part, du côté de la chambre 13B, qui est en pratique une chambre de gaz, par une valve 18B propre à la mise en charge de cette chambre de gaz 13B, et, d'autre part, du côté de la chambre 13A, qui est en pratique une chambre de liquide, et qui, sur la figure 7, se trouve réduite à rien, par un conduit 18A propre au raccordement de cette chambre de liquide 13A au circuit hydraulique à desservir, ce conduit 18A définissant, à cet effet, sous le contrôle d'un clapet, constitué, en l'espèce, par un bouton 20 porté à sa base par le séparateur souple 12, un orifice de passage de liquide non détaillé sur cette figure 7.

Ces dispositions étant bien connues par elles-mêmes, et ne faisant pas l'objet, en propre, de la présente invention, elles ne seront pas décrites plus en détail ici.

De manière également connue en soi, le séparateur souple est un séparateur composite comportant trois couches adjacentes, à savoir une couche en matière déformable externe 21A, une couche interne 21B, et une couche intermédiaire 23 au moins en partie imperméable aux gaz.

Suivant l'invention, la couche intermédiaire 23 comporte une feuille métallique 24.

Par exemple, figure 5, elle se réduit à une telle feuille métallique 24.

En variante, figure 6, elle est formée d'une feuille métallique 24 prise en sandwich entre deux feuilles de protection en matière synthétique 24A, 24B, l'une externe, l'autre interne, et adhérant à celles-ci, à la manière, par exemple, des feuilles composites vendues sous la désignation commerciale "VALERON".

Quoi qu'il en soit, la feuille métallique 24 mise en oeuvre est par exemple une feuille d'aluminium.

Son épaisseur est extrêmement faible, de l'ordre par exemple de 0,01 à 0,1 mm.

Par exemple, lorsque la feuille métallique 24 est mise en oeuvre isolément, son épaisseur peut être de l'ordre de 0,075 mm.

Lorsqu'elle est mise en oeuvre prise en sandwich entre deux feuilles de protection 24A, 24B, son épaisseur peut être de l'ordre de 0,02 mm, les deux feuilles de protection 21A, 21B ayant alors elles-mêmes une épaisseur de l'ordre de 0,03 mm.

Bien entendu, les valeurs numériques indiquées ci-dessus ne sont données qu'à titre d'exemple et ne doivent en rien être considérées comme limitatives de l'invention.

La couche externe 21A et la couche interne 21B, quant à elles, sont, de préférence, en matériau élastiquement déformable.

En pratique, elles sont en élastomètre, et, par exemple, en élastomère de type Butyl.

Pour la constitution, conjointement, d'un bourrelet 25 propre à coopérer en arrimage avec la partie en forme de crochet 18 de l'organe de support 15, elles comportent, l'une et l'autre, à leur débouché, un bourrelet, respectivement 26A, 26B, qui fait saillie radialement vers l'extérieur pour la couche externe 21A, et qui fait saillie radialement vers l'intérieur pour la couche interne 21B.

L'épaisseur des couches externe 21A et interne 21B est par exemple de l'ordre de 1,2 à 1,6 mm, et, par exemple, de l'ordre de 1,4 mm.

Mais, comme précédemment, ces valeurs numériques ne sont données qu'à titre indicatif, sans être en quoi que ce soit limitatives de l'invention.

En pratique, la couche externe 21A étant destinée à être au contact du fluide présent dans la chambre de liquide 13A, elle est établie de manière à être inerte à l'égard de ce fluide.

De ce fait, l'élastomère qui la constitue est, en pratique, un élastomère pur, c'est-à-dire un élastomère dépourvu de toute charge spécifique à l'imperméabilité aux gaz.

Par mesure de simplicité, et pour faciliter la fabrication de l'ensemble, il en est de même pour la couche interne 21B.

Conjointement, cette couche interne 21B est choisie de manière à être propre à maintenir la couche intermédiaire 23 dans la zone de la fibre neutre de l'ensemble.

Autrement dit, elle présente des caractéristiques mécaniques et d'épaisseur propres à lui permettre de maintenir ainsi cette couche intermédiaire 23 dans la zone de cette fibre neutre.

Elle contrôle alors avantageusement le rayon de courbure de cette couche intermédiaire 23.

Par exemple, et nonobstant ce qui précède, la matière constituant cette couche interne 21B est moins souple que celle constituant la couche externe 21A, et celle-ci est plus épaisse que la couche interne 21B.

En variante, la matière constituant la couche interne 21B est plus souple que celle constituant la couche externe 21A, et celle-ci est moins épaisse que la couche interne 21B.

Mais, suivant une forme de réalisation avec laquelle de très bons résultats ont été obtenus, les matières constituant les couches interne 21B et externe 21A présentent le même degré de souplesse, et cette couche interne 21B et cette couche externe 21A ont sensiblement même épaisseur.

De préférence, et tel que représenté, les diverses couches 21A, 23, 21B ainsi constitutives du séparateur souple 12 suivant l'invention sont adjacentes les unes aux autres.

De préférence, également, elles sont dépourvues de toute solidarisation entre elles, pour pouvoir jouer en service les unes par rapport aux autres, ce qui est favorable à une limitation des contraintes en leur sein.

Cependant, si désiré, il peut être procédé à leur solidarisation, par exemple par collage.

De préférence, également, et tel que représenté, le bouton 20 que porte le séparateur souple 12 suivant l'invention n'est en prise qu'avec la seule couche externe 21A, ledit bouton 20 comportant, en saillie, un erogt 27 par lequel il est encliqueté à ladite couche externe 21A, à la faveur d'un perçage axial 28 de celle-ci.

Conjointement, la couche intermédiaire 23 et la couche interne 21B comportent, chacune, en correspondance, une déformation locale en forme de dôme, respectivement 30, 31B, par laquelle elles contournent cet ergot 27.

Pour la réalisation du séparateur souple 12 suivant l'invention, les diverses couches 21A, 23, 21B qui le constituent sont fabriquées isolément, et, tel que schématisé à la figure 4, elles sont ensuite emboîtées successivement les unes dans les autres, par exemple sous vide, pour éviter la formation d'une quelconque poche d'air entre elles.

S'agissant des couches externe 21A et interne 21B, il est procédé, de manière usuelle, par moulage.

S'agissant de la couche intermédiaire 23, et tel que schématisé par un trait interrompu sur la figure 4, il est par exemple procédé par hydro-formage, en partant d'un flan 23' initialement plat.

La technique d'hydro-formage étant bien connue par elle-même, les dispositions correspondantes ne seront pas décrites ici.

Quoi qu'il en soit, les diverses couches 21A, 23 et 21B sont réalisées de manière à présenter, au repos, une configuration complémentaire de celle de la coquille inférieure 16A du corps rigide 11.

Dans la forme de réalisation représentée, cette configuration correspond à celle d'une hémisphère surmontée d'une couronne cylindrique.

Une fois ces couches 21A, 23 et 21B réalisées et emboîtées, le séparateur souple 12 qu'elles constituent conjointement est disposé à l'intérieur de la coquille inférieure 16A du corps rigide 11, en prise avec l'organe de support 15 correspondant.

Celui-ci est alors soudé à cette coquille inférieure 16A, et l'ensemble est refermé par la coquille supérieure 16B.

Les dispositions correspondantes étant bien connues par elles-mêmes, elles ne seront pas décrites ici.

Au repos, le séparateur souple 12 porte sous tension contre la surface interne de la coquille inférieure 16A du corps rigide 11.

En service, il se déforme plus ou moins, en dégageant, entre lui et la surface interne de la coquille inférieure 16A du corps rigide 11, une chambre de liquide 13A plus ou moins grande.

Sur la figure 7, a été représentée en traits interrompus sa déformation maximale.

Dans ce qui précède, la feuille métallique 24 de la couche intermédiaire 23 est continûment d'un seul tenant.

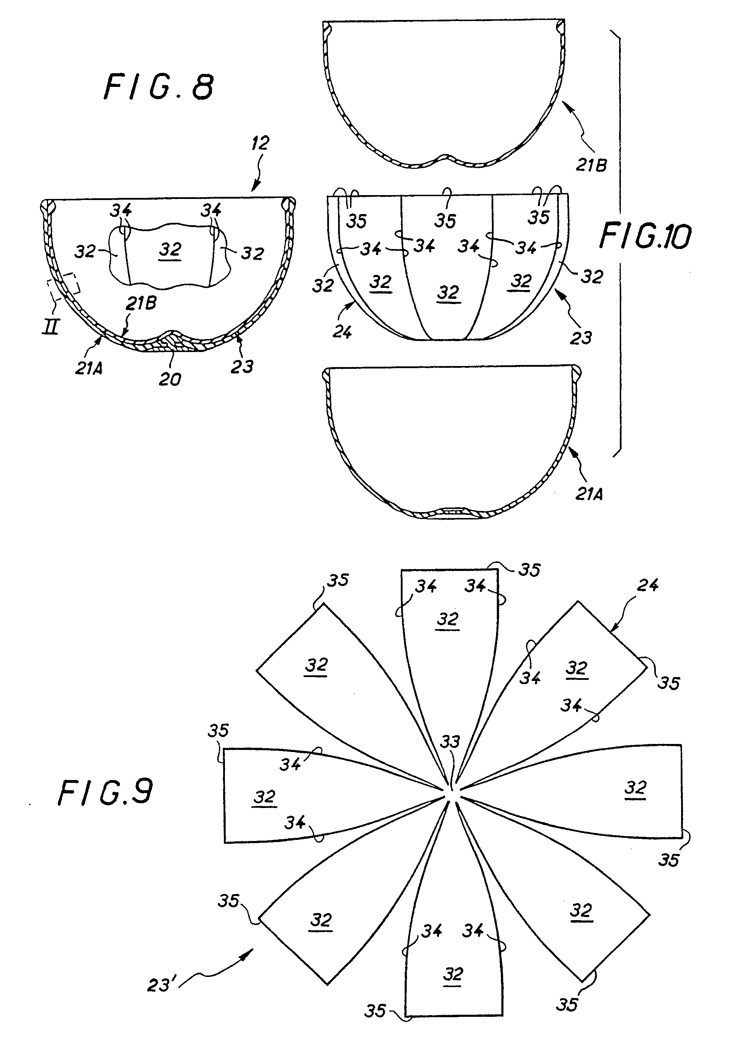

Il n'en est pas de même dans la variante de réalisation illustrée par les figures 8 à 13.

Suivant cette variante de réalisation, cette feuille métallique 24 est au moins en partie fractionnée en éléments de feuille 32, et ces éléments de feuille 32 sont au moins jointifs les uns avec les autres pour la configuration de repos du séparateur souple 12, tel que représenté sur la figure 8.

Dans la forme de mise en oeuvre plus particulièrement représentée sur les figures 8 à 10, les éléments de feuille 32 sont exactement jointifs les uns avec les autres, par leurs tranches, pour la configuration de repos du séparateur souple 12, et, tous identiques entre eux, ils vont en rayonnant à partir de la base de ce séparateur souple 12.

Pour fabriquer la couche intermédiaire 23 ainsi constituée, on part d'un flan initialement plat 23', et, tel qu'illustré à la figure 9, on le découpe à plat de manière à y individualiser les éléments de feuille 32 recherchés.

Dans les formes de mise en oeuvre représentées, ces éléments de feuille 32 ont globalement un contour triangulaire, avec, rayonnant à partir d'une zone centrale correspondant à la base du séparateur souple 12, des côtés latéraux 34, qui, pour être ultérieurement jointifs, sont convexes, et, à l'opposé de cette base, un côté sensiblement rectiligne 35.

En pratique, dans la forme de mise en oeuvre plus particulièrement repésentée sur les figures 8 à 10, la zone centrale à partir de laquelle rayonnent ainsi les éléments de feuille 32 est matérialisée par une pastille centrale 33, qui est commune à tous ces éléments de feuille 32, et qui correspond à la base du séparateur souple 12, et, tous d'un seul tenant avec cette pastille centrale 33, ces éléments de feuille 32 restent attenants, et donc solidaires, les uns avec les autres.

Du fait du contour convexe de leurs côtés latéraux 34, les éléments de feuille 32 sont écartés les uns des autres sur la partie de leur contour correspondant tant à ces côtés latéraux convexes 34 qu'à leurs côtés sensiblement rectilignes 35.

Mais, dans la forme de mise en oeuvre représentée sur les figures 8 à 10, leur découpe est faite en sorte que, par ce contour, ils soient aptes à devenir exactement jointifs les uns avec les autres, par leurs tranches, lorsque, comme représenté sur la figure 10, la couche intermédiaire 23 formée de la feuille métallique 24 ainsi fractionnée en éléments de feuille 32 est mise en place entre les couches interne 21B et externe 21A.

Pour cette configuration de mise en place, les éléments de feuille 32 sont donc bord à bord les uns avec les autres par leurs côtés latéraux convexes 34, tandis que leurs côtés sensiblement rectilignes 35 sont en continu les uns avec les autres, suivant une circonférence correspondant globalement à la périphérie du séparateur souple 12.

En pratique, le nombre d'éléments de feuille 32 mis en oeuvre est au moins égal à six.

Dans la forme de mise en oeuvre représentée sur les figures 8 à 10, ce nombre est égal à huit.

Les éléments de feuille 32 n'ont de ce fait individuellement qu'une extension réduite, en sorte que leur mise en forme suivant la configuration générale à obtenir pour le séparateur souple 12 n'y induit pas de contrainte interne notable.

Pour le reste, il est procédé comme précédemment.

En bref, une fois fabriquées isolément, les couches 21B, 23, 21A constitutives du séparateur souple 12 à obtenir sont emboîtées successivement les unes avec les autres, soit de l'intérieur, à partir de la couche externe 21A, comme représenté sur la figure 10, soit de' l'extérieur, à partir de la couche interne 21B, et leur collage mutuel est effectué conjointement sous presse.

C'est seulement au cours du pressage correspondant que la couche intermédiaire 23 se conforme aux reliefs prévus sur la couche externe 21A et sur la couche interne 21B pour l'adaptation de l'ensemble à la forme du bouton 20 par ailleurs mis en oeuvre.

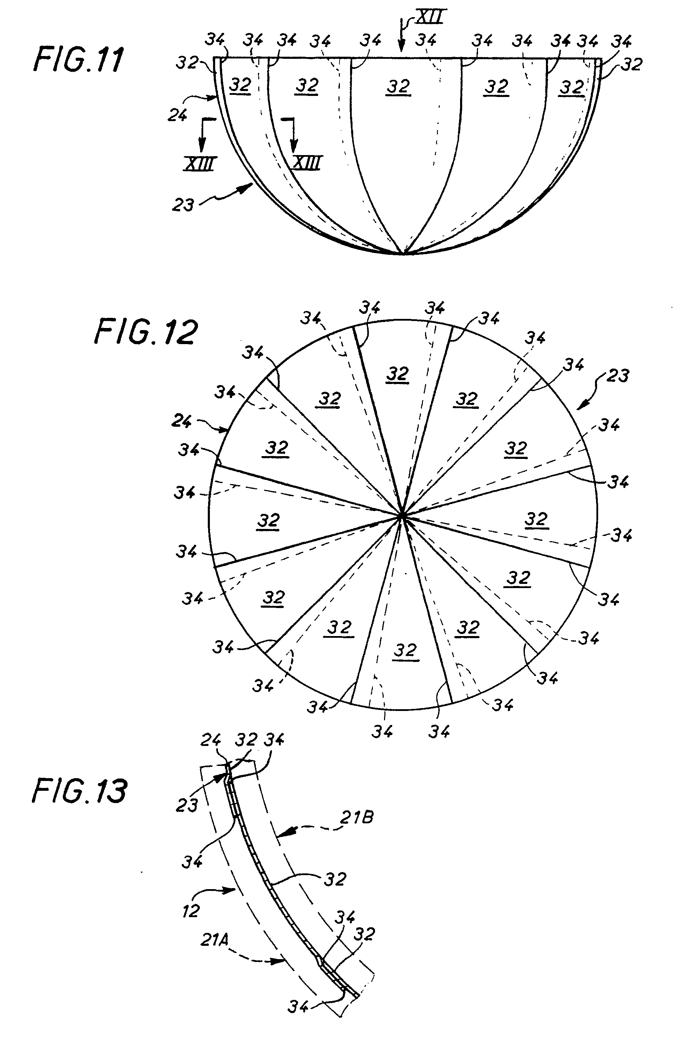

Dans la forme de mise en oeuvre illustrée par les figures 11 à 13, il est fait en sorte que, pour la configuration de repos du séparateur souple 12 concerné, les éléments de feuille 32 de la feuille métallique 24 constitutive de la couche intermédiaire 23 se recouvrent successivement au moins pour partie l'un l'autre le long de leurs côtés latéraux 34.

Dans la forme de réalisation représentée, ces éléments de feuille 32 sont au nombre de douze.

A titre indicatif, le taux de recouvrement de l'un d'eux par un autre est par exemple de l'ordre de 10 %.

Pour le reste, les dispositions sont du même type que celles décrites précédemment.

Bien entendu, la présente invention ne se limite pas aux formes de mise en oeuvre décrites et représentées, mais englobe toute variante d'exécution, notamment en ce qui concerne le nombre et/ou la forme des éléments de feuille mis en oeuvre lorsque la feuille métallique correspondante est fragmentée en de tels éléments de feuille.

De surcroît, ces éventuels éléments de feuille ne sont pas nécessairement identiques entre eux.

En outre, au lieu d'être attenants, et donc solidaires, par l'intermédiaire d'une pastille, ils peuvent être distincts.

Enfin, si, dans ce qui précède, la couche intermédiaire du séparateur souple suivant l'invention se réduit à une feuille métallique, elle peut tout aussi bien être formée, par exemple, comme indiqué en référence aux figures 1 à 7, d'une feuille composite dans laquelle une telle feuille métallique est prise en sandwich entre deux feuilles de protection en matière synthétique, en adhérant à celles-ci.

Dans un tel cas, évidemment, le flan dans lequel doit être pratiquée une découpe en éléments de feuille est le flan formé par l'ensemble de ces feuilles.

## Revendications

1. Séparateur souple composite pour réservoir de pression, du genre comportant trois couches adjacentes en matériau déformable, à savoir une couche externe (21A), une couche interne (21B), et une couche intermédiaire (23) au moins en partie imperméable aux gaz, caractérisé en ce que la couche intermédiaire (23) comporte une feuille métallique (24).

2. Séparateur souple suivant la revendication 1, caractérisé en ce que, la feuille métallique (24) de la couche intermédiaire (23) est d'un seul tenant.

3. Séparateur souple suivant la revendication 1, caractérisé en ce que la feuille métallique (24) de la couche intermédiaire (23) étant au moins en partie fractionnée en éléments de feuille (32), lesdits éléments de feuille (32) sont au moins jointifs les uns avec les autres pour la configuration de repos du séparateur.

4. Séparateur souple suivant la revendication 3, caractérisé en ce que, pour la configuration de repos du séparateur, lesdits éléments de feuille (32) se recouvrent successivement au moins pour partie l'un l'autre le long de leurs côtés latéraux.

5. Séparateur souple suivant l'une quelconque des revendications 3, 4, caractérisé en ce que lesdits éléments de feuille (32), tous identiques entre eux, vont en rayonnant à partir de la base du séparateur.

6. Séparateur souple suivant la revendication 5, caractérisé en ce que lesdits éléments de feuille (32) ont globalement un contour triangulaire, avec, rayonnant à partir de la base du séparateur, des côtés latéraux (34) convexes, et, à l'opposé de ladite base, un côté sensiblement rectiligne (35).

7. Séparateur souple suivant l'une quelconque des revendications 5, 6, caractérisé en ce que le nombre desdits éléments de feuille (32) est au moins égal à six.

8. Séparateur souple suivant la revendication 7, caractérisé en ce que le nombre desdits éléments de feuille (32) est au moins égal à huit.

9. Séparateur souple suivant l'une quelconque des revendications 5 à 8, caractérisé en ce que tous les éléments de feuille (32) sont d'un seul tenant avec une pastille centrale (33), qui leur est commune, et qui correspond à la base du séparateur.

10. Séparateur souple suivant l'une quelconque des revendications 1 à 9, caractérisé en ce que la couche intermédiaire (23) se réduit à une feuille métallique (24).

11. Séparateur souple suivant l'une quelconque des revendications 1 à 9, caractérisé en ce que la feuille métallique (24) de la couche intermédiaire (23) est prise entre deux feuilles de protection en matière synthétique, en adhérant à celles-ci.

12. Séparateur souple suivant l'une quelconque des revendications 1 à 11, caractérisé en ce que la feuille métallique (24) de la couche intermédiaire (23) est une feuille d'aluminium.

13. Séparateur souple suivant l'une quelconque des revendications 1 à 12, caractérisé en ce que l'une et l'autre des couches externe (21A) et interne (21B) sont en matériau élastiquement déformable, par exemple en élastomère.

14. Séparateur souple suivant la revendication 13, caractérisé en ce que, destinée à être au contact d'un quelconque fluide donné, la couche externe (21B), au moins, est inerte à l'égard d'un tel fluide.

15. Séparateur souple suivant l'une quelconque des revendications 1 à 14, caractérisé en ce que la couche interne (21B) présente des caractéristiques mécaniques et d'épaisseur propres à lui permettre de maintenir la couche intermédiaire (23) dans la zone de la fibre neutre de l'ensemble.

16. Séparateur souple suivant la revendication 15, caractérisé en ce que la matière constituant la couche interne (21B) est moins souple que celle constituant la couche externe (21A), et celle-ci est plus épaisse que la couche interne (21B).

17. Séparateur souple suivant la revendication 15, caractérisé en ce que la matière constituant la couche interne (21B) est plus souple que celle constituant la couche externe (21A), et celle-ci est moins épaisse que la couche interne (21B).

18. Séparateur souple suivant la revendication 15, caractérisé en ce que les matières constituant les couches interne (21B) et externe (21A) présentent le même degré de souplesse, et cette couche interne (21B) et cette couche externe (21A) ont sensiblement même épaisseur.

19. Séparateur souple suivant l'une quelconque des revendications 1 à 18, caractérisé en ce que les diverses couches (21A, 23, 21B) qui le constituent sont dépourvues de solidarisation entre elles.

20. Séparateur souple suivant l'une quelconque des revendications 1 à 19, caractérisé en ce que, portant un bouton (20), ledit bouton (20) n'est en prise qu'avec sa seule couche externe (21A), ledit bouton (20) comportant un ergot (27) par lequel il est encliqueté à ladite couche externe (21A) à la faveur d'un perçage (28) de celle-ci, et la couche intermédiaire (23) et la couche interne (21B) comportant chacune en correspondance une déformation locale en forme de dôme (30, 31B) par laquelle elles contournent ledit ergot (27).

21. Procédé pour la réalisation d'un séparateur souple conforme à l'une quelconque des revendications 1 à 20, caractérisé en ce qu'il consiste à fabriquer isolément chacune des couches (21A, 23, 21B) qui le constituent, et à les emboîter successivement les unes dans les autres.

22. Procédé suivant la revendication 21, caractérisé en ce que, pour la fabrication de la couche intermédiaire (23) d'un séparateur souple conforme à la revendication 2, on part d'un flan initialement plat (23'), et on le met en forme par hydro-formage.

23. Procédé suivant la revendication 21, caractérisé en ce que, pour la fabrication d'un séparateur souple conforme à la revendication 3, on part d'un flan initialement plat, et on découpe à plat ce flan de manière à y individualiser des éléments de feuille (32), qui, écartés les uns des autres sur une partie au moins de leur contour, sont aptes, par ce contour, à devenir au moins jointifs les uns avec les autres lorsque la couche intermédiaire (23) ainsi formée est mise en place entre les couches interne (21B) et externe (21A).

24. Réservoir de pression du genre comportant un corps rigide (11), et, dans ce corps rigide (11), un séparateur souple (12) en forme de membrane qui en sépare le volume intérieur en deux chambres (13A, 13B) distinctes, ledit séparateur souple (12) étant en prise, par son débouché (14), avec un organe de support (15), qui, solidaire dudit corps rigide (11), en maintient ledit débouché (14) plaqué contre la surface interne de celui-ci, caractérisé en ce que ledit séparateur souple (12) est conforme à l'une quelconque des revendications 1 à 20.

25. Réservoir de pression suivant la revendication 24, caractérisé en ce que, au repos, lé séparateur souple (12) porte sous tension contre la surface interne du corps rigide (11).

*FIG.1*

*FIG.2*

*FIG.3*

*FIG.4*

*FIG.5*

*FIG.6*

*FIG.7*

FIG.8

FIG.9

FIG.10

FIG.11

FIG.12

FIG.13